# EUROPÄISCHE PATENTANMELDUNG

(11) **EP 0 856 606 A2**
(43) Veröffentlichungstag der Anmeldung: **05.08.1998**
(21) Anmeldenummer: 98101706.4
(22) Anmeldetag: 02.02.1998
(51) Int. Cl.: D06H 3/00

(54) **Vorrichtung zur Messung der Schussfaden- oder Maschenreihenlage bei Textilien**

(30) Priorität: 01.02.1997 DE 19703830
(71) Anmelder: Schermuly textile computer GmbH, 35794 Mengerskirchen (DE)
(72) Erfinder: Schermuly, Klaus, 35794 Mengerskirchen (DE)
(74) Vertreter: Müller, Eckhard, Dr.

(57) **Zusammenfassung**

Es handelt sich um eine Vorrichtung (10) zur Messung der Schußfaden- oder Maschenreihenlage, insbesondere des Verzuges einer laufenden textilen Warenbahn (12) mit einer Meßvorrichtung zur Erfassung des von der zu prüfenden Ware hindurchgelassenen bzw. reflektierten Lichtes einer Durchlicht- und/oder Auflichtanordnung (16, 18), wobei die Meßvorrichtung ein optisches System (20) mit einem Linsensystem (22), einem Blendensystem (24) sowie einem Lichtsensorsystem (26) aufweist und die Winkellage des Blendensystems (24) bzgl. der zu prüfenden Ware zeitlich veränderbar ist, wobei das Blendensystem (24) durch zwei benachbart angeordnete Blendenfunktionen (28, 30) gebildet wird, wobei jede Blendenfunktion (28, 30) Bestandteil eines separaten optischen Systems (20) mit einem Linsensystem (22) und einem Lichtsensorsystem (26) und in Rotation um eine Systemlängsachse (52, 54) versetzbar ist. Um eine genaue Erfassung bzw. Detektion des Fadenverlaufs der textilen Warenbahn zu ermöglichen mit einer Erhöhung der Abtastrate, weist jede Blendenfunktion (28, 30) einen einzigen Schlitz (32, 34) auf, wobei die Schlitze (32, 34) gegeneinander um etwa 90° versetzt angeordnet und die beiden Blendenfunktionen in einem einzigen Meßkopf (14) integriert sind.

## Beschreibung

Die Erfindung betrifft eine Vorrichtung
zur Messung der Schußfaden- oder Maschenreihenlage, insbesondere des Verzuges, z.B. Bogenverzug, Diagonalverzug, S-Verzug o. dgl., einer laufenden textilen Warenbahn mit einer Meßvorrichtung zur Erfassung des von der zu prüfenden Ware hindurchgelassenen bzw. reflektierten Lichtes einer Durchlicht- und/oder Auflichtanordnung, wobei die Meßvorrichtung ein optisches System mit insbesondere einem Linsensystem, einem Blendensystem sowie einem Lichtsensorsystem aufweist und die Winkellage des Blendensystems bzgl. der zu prüfenden Ware zeitlich veränderbar ist, wobei das Blendensystem durch zwei benachbart angeordnete Blendenfunktionen gebildet wird, wobei jede Blendenfunktion Bestandteil eines separaten optischen Systems mit einem Linsensystem und einem Lichtsensorsystem und in Rotation um eine Systemlängsachse versetzbar ist.

Eine derartige Vorrichtung ist aus der deutschen Patentschrift 683 684 bekannt. Diese Vorrichtung zur Messung der Schußfadenlage weist drei Apparate auf, wobei jeder dieser Apparate einen schmalen Lichtstrahl erzeugt und oberhalb dieses Lichtstrahles eine rotierende Scheibe mit mehreren radialen Schlitzen angeordnet ist, so daß ein Ausschnitt des Lichtbandes oder Lichtstrahls auf das vorbeilaufende Gewebe fällt. Durch diese Maßnahme wird eine parallelogrammartige Fläche des vorbeilaufenden Gewebe beleuchtet, wobei diese parallelogrammartige Fläche schräg zu den Kettfäden angeordnet ist. Je nach Drehrichtung der jeweiligen Scheibe ist die beleuchtete Fläche in Bezug auf die Kettfäden in einer anderen Winkellage angeordnet. Bei gleichsinnig drehenden Scheiben sind die parallelogrammartigen Flächen parallel zueinander angeordnet, während bei gegensinnig drehenden Scheiben die Flächen i. w. senkrecht zueinander ausgerichtet sind. Sinn dieser Maßnahmen ist es, die Fadenzahl in der jeweils beleuchteten Parallelogrammfläche zu zählen, wobei diese Fadenzahl bei Diagnoalverzug oder Bogenverzug je nach Drehrichtung der Scheiben bzw. Anordnung der Parallelogrammflächen unterschiedlich ausfallen und damit ein Rückschluß auf den Fadenverzug des Gewebes gezogen werden kann. Die Apparate dieser bekannten Vorrichtung weisen solche Blenden auf, die jeweils nur ein Teilbereich des Lichtbandes zum Gewebe hindurchlassen. Weiterhin ist die Lage der Schlitze der drei rotierenden Blenden genau symmetrisch zueinander, so daß bspw. sich entgegengesetzt drehende Apparate den gleichen Bereich des Gewebes, in Transportrichtung gesehen, abtasten.

Die DE-AS 12 04 177 offenbart eine Vorrichtung zur Meßwertgewinnung von verzogenen Schußfäden, bei der eine Spaltblende über der Gewebebahn gegenüber einer ebenfalls über oder unter der Gewebebahn angeordneten schmetterlingsförmigen Meßblende rotiert. Die rotierende Spaltblende enthält mehrere Spalte. Die Meßfeldblende hat eine solche Winkelabmessung, daß jeweils nur ein Spalt im Meßfeld liegt und der nächste eintritt, wenn der vorhergehende das Meßfeld verläßt. Sinn dieser Vorrichtung ist es, die Abtastfrequenz zu erhöhen.

Eine weitere Vorrichtung ist bspw. aus der DE 35 26 302 A1 bekannt. Bei der Herstellung von Geweben kreuzen sich Kett- und Schußfäden rechtwinklig. Während verschiedener späterer Arbeitsgänge in der Ausrüstung können die Gewebe aber wieder verzogen werden. Dieser Verzug muß durch entsprechende Richtmaschinen beseitigt werden, wobei diese Richtmaschinen den Verzugswinkel als Steuergröße benötigen. Demgemäß ist die bekannte Vorrichtung dazu ausgelegt, den Verzugswinkel zu erfassen. Hierzu sind bei der bekannten Vorrichtung vier Lichtquellen sowie vier drehbare Meßköpfe vorgesehen, wobei je zwei dieser vier Paare von Lichtquellen und zugeordneten Meßköpfen an jeder Seite einer Längs-Mittellinie einer textilen Warenbahn angeordnet sind. Der Meßkopf umfaßt ein Gehäuse, in dem ein Innenhalter über einen Motor und einen mechanischen Antrieb auf Lagern drehbar gelagert ist. Der drehbare Halter weist im Bereich einer Stirnöffnung eine Schutzscheibe sowie eine erste Blende und eine erste Linse zum Fokussieren des Lichtstrahls auf, wobei der ersten Linse eine zweite Linse zur Bündelung des Lichtstrahls auf das Lichtsensorsystem nachgeordnet ist. Zwischen den beiden Linsen ist eine zweite Blende mit einer einstellbaren Öffnungsweite vorgesehen. An der Außenseite des drehbaren Halters ist eine Scheibe angeordnet, die mit mehreren Indexrasten für Winkelstellungen kodiert ist, die gegenüber einem Signal oder Bezugswinkel vorgegeben und durch feste Ablesungsmittel ermittelt werden. Sowohl das Lichtsensorsystem als auch die Ablesungsmittel zur Zuordnung der jeweiligen Winkellage des Meßkopfes zu dem Signal des Lichtsensorsystems sind mit Mikroprozessoren verbunden, die über Verbindungsleitungen an eine zentrale Einheit angeschlossen sind und letztlich zur Einstellung verschiedener Parameter der Richtmaschine dienen.

Schließlich ist eine weitere Vorrichtung aus der DE 36 33 439 C2 bekannt, bei der mittels einer Durchlicht- oder Auflichtmeßanordnung das von der zu prüfenden Ware in einem i. w. linienförmigen Bereich hindurchgelassene bzw. reflektierte Licht einer Lichtquelle erfaßt wird. Der linienförmige Bereich ist in seinem Winkel relativ zu der Ware durch Verstellmittel verstellbar, wobei die Verstellmittel den linienförmigen Bereich in mindestens acht diskreten, äquidistanten Winkelstufen kippen oder drehen. Desweiteren ist ein Speicher zum Speichern der Meßwerte entsprechend den Winkelstufen vorgesehen, wobei der Speicher an einer Recheneinheit angeschlossen ist, welche die Speicherinhalt miteinander in Beziehung setzt und aus dem Ergebnis den Verzugswinkel errechnet.

Desweiteren sind neben diesen dynamischen Meßsystemen auch statische Meßsysteme bekannt.

Als nachteilig an den bekannten Systemen erweist sich, daß die Abtastgeschwindigkeit bzw. die Abtastrate der textilen Warenbahn begrenzt ist. Dies ist insbesondere dann problematisch, wenn die textile Warenbahn nicht einen gleichförmigen Verzug, sondern unsymmetrische, wellenförmige und aus Bogen- und Schrägverzugsanteilen zusammengesetzte Verzüge aufweist oder solche textilen Warenbahnen mit ungleichförmigen Fadenverlauf, wie bspw. Schlingenware o. dgl. zu vermessen sind.

Demgegenüber liegt der Erfindung die Aufgabe zugrunde, eine Vorrichtung mit den eingangs genannten Merkmalen dahingehend weiterzubilden, daß eine genaue Erfassung bzw. Detektion des Fadenverlaufs der textilen Warenbahn ermöglicht ist, wobei insbesondere eine Erhöhung der Abtastrate bzw. Abtastgeschwindigkeit angestrebt ist.

Diese Aufgabe wird bei der Vorrichtung mit den eingangs genannten Merkmalen i. w. dadurch gelöst, daß jede Blendenfunktion einen einzigen Schlitz aufweist, die Schlitze gegeneinander um etwa 90° versetzt angeordnet und die beiden Blendenfunktionen in einem einzigen Meßkopf integriert sind.

Aufgrund dieser Maßnahme kann mit jedem Meßkopf eine Verdopplung der Datenrate bzw. Abtastrate gegenüber den bekannten Systemen erzielt werden, da aufgrund des Vorhandenseins von zwei schlitz- oder spaltförmigen Blendenfunktionen in einem einzigen Meßkopf die doppelte Anzahl von "Bildern" der laufenden textilen Warenbahn pro Umdrehung des Meßkopfes erfaßt werden kann. Vor allem bei rotierendem System kommt dieser Vorteil zum Tragen.

Insoweit lassen sich auch die Faden- oder Maschenreihenlage von schnell an der Vorrichtung vorbeilaufendem textilen Material sicher erfassen. Die textilen Warenbahnen werden bei der Herstellung bzw. Ausrüstung mit einer Geschwindigkeit von bis zu 200 m/min und mehr in den entsprechenden Maschinen bewegt bzw. transportiert. Darüber hinaus erweist sich die Vorrichtung auch insoweit als vorteilhaft, als bei einer Umstellung der Textilart aufgrund der Erhöhung der Datenrate bzw. Abtastrate ein manueller Obgleich der der Vorrichtung nachgeschalteten Auswerteelektronik, wie Filter o. dgl. nicht mehr notwendig ist. Aufgrund der erhöhten Abtastrate bzw. Datenrate ist auch eine verbesserte Signalausbeute gegeben, die sich vor allem bei der Vermessung von Schlingen- bzw. Maschenware vorteilhaft auswirkt. Die Schlitzbreite der Blendenfunktion liegt dabei je nach Auslegung des optischen Systems im Bereich 0,2 bis 0,4 mm. Aufgrund dieser Maßnahme ist es möglich, pro Umdrehung der Blendenfunktion bzw. der Linsensysteme eine Verdopplung der Datenrate bzw. Abtastrate über die Faden- oder Maschenlage der laufenden textilen Warenbahn zu erhalten. Die Drehzahl der Blendenfunktionen um die Systemlängsache liegt dabei bevorzugt bei bis zu 6 bis 8 Umd/sec. Auch kann die Drehzahl des Systems der Laufgeschwindigkeit der textilen Warenbahn angepaßt sein. Die Systemlängsachse steht bevorzugt i. w. senkrecht zur Fläche der textilen Warenbahn. Erfindungsgemäß sind somit in jedem Meßkopf zwei optische Systeme mit jeweils einer Blendenfunktion vorgesehen, wobei die Winkellage der Blendenfunktion bzgl. der zu prüfenden Ware zeitlich veränderbar ist. Auch in diesem Fall wird die Abtastrate pro Meßkopf gegenüber den herkömmlichen rotierenden Meßköpfen verdoppelt, so daß eine verbesserte Erfassung der Faden- oder Maschenreihenlage des an dem Meßkopf vorbeilaufenden textilen Materials ermöglicht ist. Darüber hinaus wird aufgrund der benachbarten Anordnung der beiden Blendenfunktionen in einem einzigen Meßkopf eine feinere örtliche Auflösung in Richtung der Quererstreckung der laufenden textilen Warenbahn erreicht. Einhergehend mit dieser Maßnahme ist der Vorteil, daß zur Abtastung der gesamten Breite der Warenbahn insgesamt weniger Meßköpfe erforderlich sein können als es bei den herkömmlichen Vorrichtung der Fall ist. Bei oszillierenden Meßköpfen hängt das Ergebnis des Abtastratenvergleichs u. a. ab von den nötigen Umkehrpausen und dem Abtastwinkel des oszillierenden Systems. Dabei weisen die Blendenfunktionen jeweils eine einzige Spalt- oder Schlitzblende auf.

Nach einer ersten Weiterbildung der Erfindung durchstößt die Systemlängsachse in etwa die Mitte des Schlitzes.

Von Vorteil ist jede Blendenfunktion zusammen mit dem zugehörigen Linsensystem in Rotation um jeweils eine Systemlängsachse versetzbar, die i. w. normal zur Fläche der Warenbahn ausgerichtet sind. Da die beiden Blendenfunktionen um etwa 90° gegeneinander versetzt sind, wird mit dieser Vorrichtung nicht nur eine Erhöhung der Auflösung in Querrichtung, sondern auch in Längsrichtung, d.h. in der Laufrichtung der textilen Warenbahn erreicht, indem die Abtastrate verdoppelt wird.

Von Vorteil weist die Rotationsfrequenz der beiden optischen Systeme des Meßkopfes gleiche Werte auf. Hierdurch ist die Möglichkeit gegeben, eine einzige Antriebsvorrichtung für die beiden optischen Systeme einzusetzen, wobei die optische Systeme bzw. deren Gehäuse bspw. über eine Zahnradanordnung o. dgl. zur Übertragung der Drehbewegung von dem einen optischen System auf das andere optische System gekoppelt sind.

Dabei hat es sich als ganz besonders vorteilhaft erwiesen, daß die beiden Blendenfunktionen gegensinnig um ihre jeweilige Systemachse gedreht werden. Diese eigenständige, besondere Ausgestaltung der Erfindung weist den Vorteil auf, daß eine selbsttätige Kompensation des Zeitversatzes bzw. Winkelversatzes der Signale der beiden Lichtsensorsysteme des Meßkopfes gegeben ist, die vor allem beim Einsatz von analoger Filtertechnik sinnvoll ist. Bei digitaler Filtertechnik ist im allgemeinen eine Filterung ohne Zeitverzögerung durchführbar, doch ergibt sich eine Verzögerung in der Auswertung. Im übrigen wird häufig auch der analogen Filtertechnik aus Kostengründen der Vorzug gegeben. Zur Interpretation bzw. Auswertung der Signale der Lichtsensorsysteme ist es im allgemeinen erforderlich, daß die Ausgangssignale der Lichtsensorsysteme unter anderem eine oder mehrere Filterfunktionen durchlaufen. Ein Filtern der Signale führt jedoch zu einem Zeitversatz bzw. einer zeitlichen Verzögerung der Signale bzw. zu einer Verschiebung der Korrelation des Signals mit dem jeweiligen Drehwinkel des Blendensystems. Bei einer gleichsinnigen Rotation beider Blendenfunktionen würde dieser Zeitversatz bzw. Winkelversatz bei der Filterung der Ausgangssignale des Lichtsensorsystems sich aufaddieren und zu einem unter anderem von der Rotationsfrequenz abhängigen Winkelfehler in der Bestimmung der Faden- oder Maschenlage führen. Bei gegensinniger Rotation der beiden Blendenfunktionen bzw. ggf. der zugehörigen Linsensysteme führt eine linsenpositionsrichtige Addition zu einer Kompensation dieses Zeitversatzes bzw. Winkelversatzes der beiden Signale der Lichtsensorsysteme. Das Summensignal der beiden Lichtsensorsysteme ist im Falle einer gegensinnigen Rotation der beiden Blendenfunktionen somit nicht mit einem rotationsfrequenzabhängigen Fehler bzgl. der Winkelzuordnung behaftet. Ansonsten unter Umständen erforderlich werdende drehzahlabhängige Kompensationsmethoden, die ggf. einen erheblichen elektronischen Aufwand bedeuten erforderlich machen würden, können entfallen.

Nach einer anderen Ausführungsform der Erfindung ist das Linsensystem durch eine Zylinderlinse gebildet. Für den Fall, daß die Blendenfunktion als eine Blende mit kreuzförmiger Durchbrechung ausgebildet ist, wird demgemäß auch eine kreuzförmig ausgebildete Zylinderlinse eingesetzt.

Nach einer anderen Ausführungsform der Erfindung ist jedem Meßkopf ein Schrittmotor zugeordnet, der über einen Riementrieb, wie O-Ring, Zahnriemen o. dgl., bzw. über ein Zahnradgetriebe o. dgl. mit dem oder den optischen Systemen bzw. den das oder die optische Systeme aufnehmenden Gehäuse in Antriebsverbindung steht. Der Vorteil des Einsatzes eines Schrittmotors mit Getriebe besteht auch darin, daß sich aus den Schritt-Takten ohne Aufwand direkt die Winkelposition der optischen Systeme ableiten lassen.

Dabei hat es sich als vorteilhaft erwiesen, daß die beiden optischen Systeme des Meßkopfes unmittelbar über eine Verzahnung in Antriebsverbindung stehen, wobei der Schrittmotor eines der beiden optischen Systeme unmittelbar oder auch über ein Getriebe antreibt. Durch diese Maßnahme wird auf einfache Art und Weise eine für beide optischen Systeme gleiche Rotationsfrequenz und auch die vorteilhafte gegenläufige Rotation beider Systeme bewerkstelligt.

Nach einer anderen Ausführungsform der Erfindung, die ebenfalls eigenständigen Charakter aufweist, hat es sich als vorteilhaft erwiesen, daß die Auflichtanordnung, bspw. in Form von Infrarot-Leuchtdioden o. dgl., in dem Meßkopf aufgenommen und abgeschattet seitlich des optischen Systems angeordnet ist. Bevorzugt ist dabei die optische Achse der Auflichtanordnung in einem Winkel von etwa 45° zu der Systemlängsachse des oder der optischen Systeme ausgerichtet. Beim 2-linsigen System kann auch die Auflichtanordnung 2-kanalig ausgeführt werden, wodurch quasi zeitsynchron sowohl die Auflicht- wie auch eine Durchlichtanordnung innerhalb eines Meßkopfes durchgeführt werden kann.

Zur Verbesserung des Signal-Rausch-Verhältnisses hat es sich als vorteilhaft erwiesen, daß zwischen dem Blendensystem und dem Lichtsensorsystem ein Lichtsammelsystem, wie Lichtleiter, Spiegel und/oder Linse, angeordnet ist. Aufgrund dieser Maßnahme ist eine optimale Umsetzung des in das optische System einfallenden Lichts in ein elektrisches Signal gewährleistet.

Von Vorteil ist nach einer anderen Weiterbildung der Erfindung das Lichtsensorsystem im Inneren eines Abdecktubus insbesondere stationär angeordnet, wobei der Abdecktubus Zentrierhilfen zur Führung/Lagerung des Blendensystems aufweist. Die insbesondere stationäre Anordnung des Lichtsensorsystems weist den Vorteil auf, daß die Abnahme der elektrischen Signale von dem Lichtsensorsystem und Zuleitung dieser Signale hin zu der elektronischen Weiterverarbeitungsvorrichtung mittels herkömmlicher, stationärer verlegter Leitungen erfolgen kann. Beim Stand der Technik, bei dem sich das Lichtsensorsystem mitdreht, ist hingegen eine Signalweiterleitung bspw. über Schleifringe oder über eine Sender-Empfänger-Einheit erforderlich. Auch erweist sich die Möglichkeit, das Lichtsensorsystem unmittelbar auf der Leiterplatte zu montieren, als äußerst vorteilhaft.

Zur Auswertung der Ausgangssignale des oder der Lichtsensorsysteme des Meßkopfes sind Filterfunktionen sowie Additionsfunktionen vorgesehen. Zum einen können durch diese Maßnahme störende Frequenzkomponenten aus dem Ausgangssignal herausgefiltert werden, wodurch die Interpretation der Signale, insbesondere bei komplizierten Fadenstrukturen oder auch bei Maschen- oder Schlingenware, erleichtert wird. Zum anderen dient die Additionsfunktion der Eliminierung von Fehlern in der Zuordnung des Ausgangssignals zu dem jeweiligen Drehwinkel des Systems.

Eine mechanisch besonders einfache konstruktive Weiterbildung der Erfindung besteht darin, daß das Linsensystem und/oder das Blendensystem in einem drehbar gelagerten Gehäuse montiert und das Lichtsensorsystem stationäre im Meßkopf angeordnet sind.

Weiterhin hat es sich als vorteilhaft erwiesen, daß die Drehzahl des Blendensystems bevorzugt bis zu ca. 6 bis 8 Umd/sec beträgt und/oder die des Schrittmotors bei ca. 400 Schritten pro Umdrehung liegt. Letzteres entspricht etwa einer Auflösung von 0,9 Winkelgrad, bei einer angenommenen Getriebeübersetzung von 1:1.

Obwohl die Vorrichtung bereits mit einem einzigen Meßkopf, sozusagen als Einzelkopfvorrichtung funktionsfähig ist, besteht ein komplettes Meßsystem, je nach Breite der zu vermessenden textilen Warenbahn aus zwei bis ca. zehn Meßköpfen, die über eine serielle Verbindung mit der Auswerteelektronik verbunden sind. Desweiteren besteht die Möglichkeit, Maßnahmen vorzusehen, so daß zwischen einer Durchlicht- und Auflichtanordnung selbsttätig oder auch von außen gesteuert, je nach zu prüfendem Warenmaterial umgeschaltet werden kann.

Weitere Ziele, Vorteile, Merkmale und Anwendungsmöglichkeiten der vorliegenden Erfindung ergeben sich aus der nachfolgenden Beschreibung der Ausführungsbeispiele anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Figur 1: eine Seitenansicht einer ersten Ausführungsform der Erfindung in Prinzipdarstellung,
- Figur 2: beispielhaft in schematischer Darstellung eine Blende mit kreuzförmiger Durchbrechung sowie eine Segmentblende, die in der Vorrichtung gemäß Figur 1 zum Einsatz kommen,
- Figur 3: eine zweite Ausführungsform der erfindungsgemäßen Vorrichtung in Seitenansicht und schematischer Darstellung,
- Figur 4: eine Draufsicht auf die Vorrichtung der Figur 3,
- Figur 5: ein Detail eines optischen Systems der Figur 3 im Bereich des Lichtsensorsystems und
- Figur 6: in Prinzipdarstellung eine schematische Anordnung eines Teils der Komponenten der Auswerteelektronik für die Vorrichtung gemäß Figur 3.

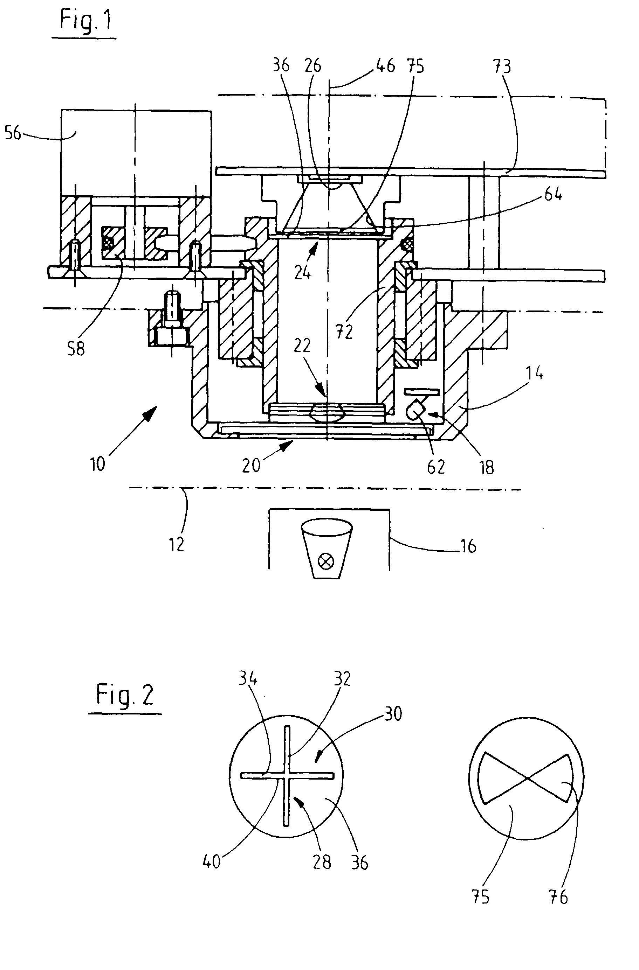

Die in Figur 1 dargestellte Vorrichtung 10 zur Messung der Schußfaden- oder Maschenreihenlage, insbesondere des Verzuges einer laufenden textilen Warenbahn 12 weist einen Meßkopf 14 zur Erfassung des von der prüfenden Waren hindurchgelassenen bzw. reflektierten Lichtes einer Durchlichtanordnung 16 oder Auflichtanordnung 18 auf. Der Meßkopf 14 ist mit wenigstens einem optischen System 20 ausgestattet. Das optische System 20 besteht aus einem Linsensystem 22, einem Blendensystem 24 sowie einem Lichtsensorsystem 26. Das Lichtsensorsystem 26 ist unmittelbar auf einer Leiterplatte 73 angeordnet oder befestigt. Dabei ist die Winkellage wenigstens des Blendensystems 24 sowie des Linsensystems 22 bzgl. der textilen Warenbahn 12 zeitlich veränderbar. Insbesondere können das Blenden- und Linsensystem 22, 24 starr miteinander gekoppelt sein und gemeinsam in Rotation versetzt werden. Zwischen dem Lichtsensorsystem 26 und dem Blendensystem 24 ist bevorzugt eine Segmentblende 75 mit zwei diametral angeordneten Durchbrechungen 76 angeordnet. Die Durchbrechungen 76 weisen die Form von Kreissegmenten o. dgl. mit einem Winkelbereich von ca. ± 45° auf.

Zur Auswertung der von dem Meßkopf kommenden Signale sind unter anderem Filterfunktionen, Mischstufen, Phase-Lock-Loop- bzw. Fast-Fourier-Transformation-Funktionen vorgesehen. Die Auswertung der Signale erfolgt in einem Rechner, indem die verzugsabhängigen Signale der jeweiligen Winkelposition des Abtastkopfes zugeordnet werden.

Das Blendensystem 24 weist erfindungsgemäß wenigstens zwei schlitz- oder spaltförmige Blendenfunktionen 28, 30 auf, wobei die Schlitze oder Spalte 32, 34 der beiden Blendenfunktionen 28, 30 um etwa 90° gegeneinander versetzt angeordnet sind. Im Idealfall wird ein exakter Winkelversatz von 90° zwischen den beiden Schlitzen oder Spalten 32 oder 34 angestrebt.

Gemäß der Ausführungsform des Blendensystems 24 nach Figur 2 sind die Blendenfunktionen 28, 30 durch eine einzige Blende 36 mit kreuzförmigen Durchbrechungen 28 gebildet. Die Durchbrechungen 38 weisen nach einer bevorzugten, im Ausführungsbeispiel dargestellten Ausgestaltung die Form eines Kreuzes 40 mit 90°-Drehsymmetrie auf. Dabei ist das Blendensystem 24 bevorzugt mit dem Linsensystem 22 starr gekoppelt und in eine Rotation um eine Systemlängsachse 46 versetzbar. Aufgrund der zum Einsatz kommenden Blende 36 mit kreuzförmiger Durchbrechung 38 ist es nunmehr möglich, die an dem Meßkopf 14 vorbeilaufende textile Warenbahn 12 mit einer gegenüber herkömmlichen Systemen doppelte Abtastrate abzutasten. Dies heißt mit anderen Worten, daß die erfindungsgemäße Vorrichtung in der Lage ist, bei gleicher Rotationsfrequenz doppelt so viele "Bilder" des Faden- oder Schlingenverlaufs der vorbeilaufenden Warenbahn 12 aufzunehmen. Dabei blendet die Segmentblende 75 jeweils das die eine der beiden Blendenfunktionen 28, 30 durchsetzende Licht aus, da es lediglich erforderlich ist, die Fadenlagen der Warenbahn 12 bzw. dem Verzugswinkel nur in einem max. Bereich von ± 45° zu erfassen.

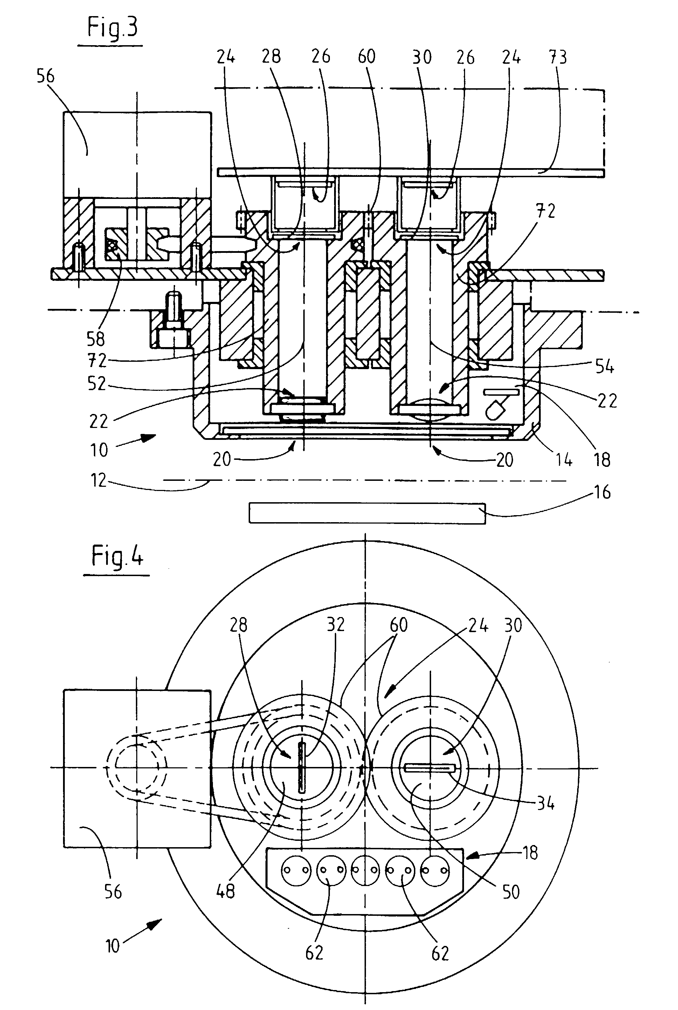

Gemäß dem zweiten Ausführungsbeispiel der Figur 3 wird das Blendensystem 24 durch zwei benachbart angeordnete Blendenfunktionen 28, 30 gebildet. Jede Blendenfunktion 28, 30 ist Bestandteil eines separaten optischen Systems 20 mit einem Linsensystem 22 und einem bevorzugt starr gekoppelten Lichtsensorsystem 26, die gemeinsam in einem einzigen Meßkopf 14 angeordnet sind. Wie der Figur 4 zu entnehmen ist, sind die Blendenfunktionen 28, 30 als Spalt- oder Schlitzblende 48, 50 ausgebildet. Jede dieser Blendenfunktionen 28, 30 bzw. Schlitzblenden 48, 50 sowie das zugeordnete Linsensystem 22 können bevorzugt gemeinsam in Rotation um die jeweilige Systemlängsachse 52, 54 versetzt werden. Die Rotationsfrequenz der beiden Blendenfunktionen 28, 30 wird bevorzugt auf gleiche Werte eingestellt, wobei die beiden Blendenfunktionen 28, 30 gegensinnig um ihre jeweilige Systemlängsachse 52, 54 gedreht werden. Eine Ausblendung der Signale der Blendenfunktionen 28, 30 in dem nicht interessierenden Bereich, z.B. bei maximalen Verzugwinkeln oberhalb von ± 45°, kann in diesem Fall anstelle durch den Einsatz einer Segmentblende 75 auch elektronisch ohne mechanische Blende erfolgen.

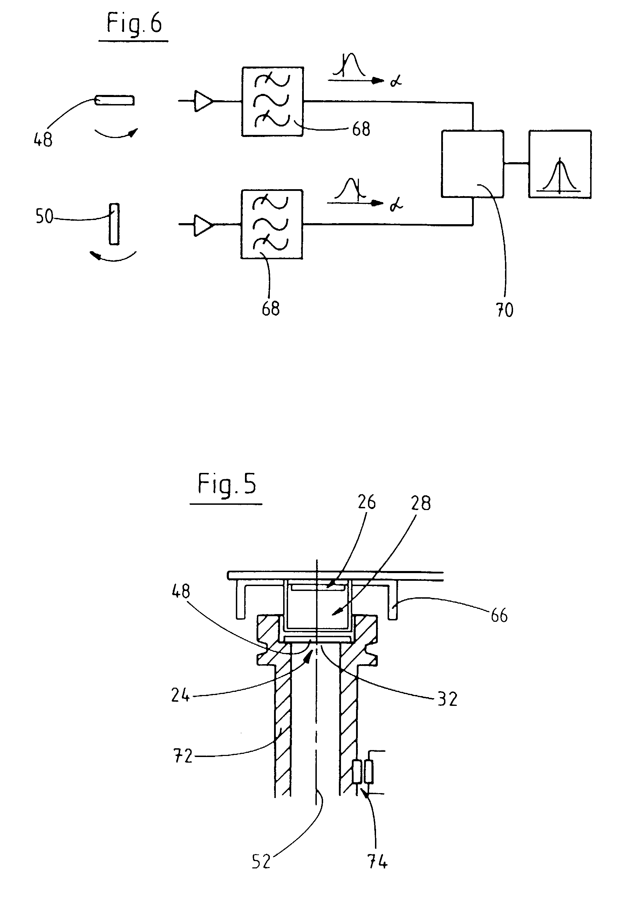

Diese gegensinnige Rotation hat den Vorteil, wie schematisch in Figur 6 dargestellt, daß der aufgrund von dem Lichtsensorsystem 26 nachgeschalteten Filterfunktionen 68 auftretende Zeitversatz der Signale durch linsenpositionsrichtige Addition in einer Additionsfunktion 70 wieder kompensiert wird. Dieser Zeitversatz bzw. Winkelversatz ist bei den skizzenhaft in der Figur 6 dargestellten Signalverläufen durch einen Balken links bzw. rechts des Signalmaximus dargestellt. Aufgetragen bei diesen Signalverläufen ist der Amplitudengang als Funktion des Drehwinkels, zeitlich gesehen sind natürlich beide Signalverläufe verspätete bzw. verzögert gegenüber dem ungefilterten Signal.

Von Vorteil ist das Linsensystem 22 im Ausführungsbeispiel der Figur 1 wie auch der Figur 3 als Zylinderlinse ausgestaltet. Es versteht sich, daß im Ausführungsbeispiel der Figur 1 die Zylinderlinse der Blende 36 mit kreuzförmiger Durchbrechung 38 angepaßt sein sollte, so daß diese Zylinderlinse in Form einer Zylinderkreuzlinse ausgebildet ist.

Beiden Ausführungsformen gemeinsam ist, daß jedem Meßkopf 14 ein Schrittmotor 46 zugeordnet wird, der über einen Riementrieb 58, wie O-Ring, Zahnriemen o. dgl., bzw. über ein Zahnradgetriebe mit dem oder den optischen Systemen 20 in Antriebsverbindung steht.

Im Falle des Ausführungsbeispiels der Figur 3 stehen die beiden optischen Systeme 20 unmittelbar über eine Verzahnung 60 miteinander in Antriebsverbindung, wobei der Schrittmotor 56 eines der beiden optischen Systeme 20 antreibt. Durch diese Maßnahmen ist neben der gleichen Rotationsfrequenz der beiden optischen Systeme 20 auch die gegensinnige Drehrichtung der beiden Systeme 20 gewährleistet.

Weiterhin ist in den Ausführungsbeispielen der Figur 1 wie auch 3 eine Auflichtanordnung 18, bspw. in Form von Infrarot-Leuchtdioden 62 integriert. Diese Infrarot-Leuchtdioden 62 sind in dem Meßkopf 14 mit aufgenommen und abgeschirmt seitlich des optischen Systems 20 angeordnet.

Zwischen dem Blendensystem 24 und dem Lichtsensorsystem 26 ist ein Lichtsammelsystem 64, bspw. in Form von Lichtleitern, Spiegeln und/oder einer Linse, angeordnet. Durch diese Maßnahme wird für eine Verbesserung des Signal-Rausch-Abstandes gesorgt. Wie insbesondere dem Detailausschnitt der Figur 5 zu entnehmen ist, ist das Lichtsensorsystem 26 in Inneren eines Abdecktubus 66 stationär in dem Meßkopf 14 angeordnet. Dabei weist der Abdecktubus 66 Zentrierhilfen zur Führung und/oder Lagerung des Blendensystems 24 oder eines das Blendensystem 24 aufnehmenden Gehäuses 72 auf. Das Blendensystem 24 sowie das Linsensystem 22 sind in einem drehbar gelagerten Gehäuse 72 montiert, wobei das Lichtsensorsystem 26 stationär im Meßkopf 14 angeordnet ist. Diese Maßnahme erweist sich insofern als vorteilhaft, als die Ausgangssignale des Lichtsensorsystems 26 durch einfache stationäre Datenleitungen der Signalauswertungsschaltung zugeführt werden können. Insbesondere durchlaufen die Ausgangssignale der beiden Lichtsensorsysteme 26 des Meßkopfes 14 gemäß dem Ausführungsbeispiel der Figur 3 jeweils wenigstens eine Filterfunktion 68 und eine Additionsfunktion 70, wie dies in Figur 6 dargestellt ist.

Die Drehzahl des Blendensystems 24 beträgt bevorzugt bis ca. 6 bis 8 Umd/sec, wobei die Schrittzahl des Schrittmotors 56 bei etwa 400 Schritten pro Umdrehung liegt.

Bei beiden Ausführungsformen gemäß den Figuren 1 bzw. 3 sind bei einer Drehzahl von 6 Umd/sec der optischen Systeme 20 bzw. Blendenfunktion 28 vierundzwanzig Messungen pro Sekunde möglich. Der Abtastbereich ist bis zu 70 Fäden pro cm als Standardausführung vorgesehen. Der Abstand zwischen der Warenbahn 12 und dem Meßkopf 14 liegt bei etwa 10 bis 30 mm, bevorzugt etwa 15 mm. Von Vorteil ist auch eine automatische Umschaltung von der Messung in Durchlichtanordnung 16 zur Messung mit Auflichtanordnung 18 vorgesehen. Dies kann in Abhängigkeit von der Qualität der textilen Warenbahn erfolgen.

Zur Abtastung einer ganzen Warenbahn ist eine Anordnung mit ca. zwei bis acht Meßköpfen 14 vorgesehen, die längs einer Querachse der Warenbahn 12 angeordnet sind und über eine serielle Verbindung mit einem Rechner verbunden sind. Desweiteren ist auch eine, insbesondere nachrüstbare Einzel-Meßkopf-Version vorgesehen, die ebenfalls seriell mit dem Rechner verbunden sein kann, aber über weniger Steuer- und Informationsleitungen verfügt.

Die Oberfläche des textilen Materials wird entweder bei Auflicht oder aber die Gewebekonstruktion bei Durchlicht mittels des optischen Systems 20 auf die Blendenebene des Blendensystems 24 abgebildet und entsprechend von dem Lichtsensorsystem 26 erfaßt. Als optisches System 20 wird bevorzugt eine Zylinderlinse eingesetzt, die in Verbindung mit der achsparallelen Blende 36 mit kreuzförmiger Durchbrechung 38 bzw. den Spaltblenden 48, 50 ein winkelabhängiges Signal liefert. Im einfachsten Fall entspricht die Winkelposition mit der höchsten Amplitude dem tatsächlichen Schußfadenverzug. Durch den Einsatz der Blende 36 mit kreuzförmiger Durchbrechung oder den Einsatz zweier getrennter optischer Systeme 20 mit jeweils, insbesondere rechtwinklig zueinander angeordneten Spaltblenden 48, 50 wird eine Verdopplung der Datenrate gegenüber den herkömmlichen, mit einer einzigen Spaltblende ausgestatteten Meßköpfen 14 erreicht.

Zur Gewährleistung einer korrekten Messung der Schußfaden-, Maschenreihen- oder Schlingenlage des textilen Gewebes ist es erforderlich, daß die Warenbahn 12 mit einer ausreichenden Geschwindigkeit an der Vorrichtung vorbeibewegt wird, so daß eine Wechselsignal des Lichtsensorsystems 26 mit ausreichender Fadenfrequenz entsteht. Bevorzugte untere Geschwindigkeit der Warenbahn 12, bei der eine zufriedenstellende Erfassung möglich ist, liegen bei 2 bis 5 m/min. Desweiteren ist es erforderlich, daß die optischen Systeme 20 mit einer bekannten Winkelgeschwindigkeit um die Systemlängsachse 46, 52, 54 rotieren, wobei die momentane, absolute Winkelposition bspw. über den Schrittmotor 56, erfaßt wird. Die Beleuchtung in der Durchlichtanordnung 16 bzw. Auflichtanordnung 18 ist so auszuregeln, daß ein ausreichender Signal- Rauchabstand eingehalten werden kann. Zur Festlegung einer Referenzposition ist der Referenzpositionsgeber 74 vorgesehen.

Die eingelesenen Daten der beiden optischen Systeme 20 des Ausführungsbeispiels der Figur 3 werden für die Ermittlung des zu messenden Verzuges der textilen Warenbahn 12 noch weiter aufbereitet bzw. konditioniert. Einige Merkmale der Signalkonditionierung sind ein umschaltbares, globales Frequenzverhalten, bspw. im Hinblick auf Teppichware/Standardware/Hochfein, eine digital einstellbare Verstärkung zwischen ca. 0,5 und 40, der Einsatz digital einstellbarer Filter mit variabler Mittenfrequenz und stufenweise einstellbare Güte, umschaltbare Integrationszeitkonstanten, umschaltbares Auflicht/Durchlicht sowie ggf. digital einstellbare Lichtstärke des Auflichtes bzw. Durchlichtes.

Der prinzipielle Ablauf des Meßvorganges mit der Vorrichtung gemäß Figur 3 stellt sich wie folgt dar: Jede Blendenfunktion 28, 30 mit zugeordneten, separaten Systemen 20 kreuzt pro Umdrehung die Schußfadennormallage zweimal, einmal mit 0° und dann mit 180° gedrehter Blendenfunktion 28, 30 bzw. gedrehtem Linsensystem 22. Obwohl beide Signale theoretisch identisch sein sollten, werden insbesondere in der Auflichtanordnung 18, aber auch in der Durchlichtanordnung 16 beide Signale zunächst getrennt verarbeitet. Zur Synchronisation dient ein Impulsgeber, der einen Impuls an einer konstanten Stellung des Gehäuses 72 bzw. des Schrittmotors 56 abgibt. Alle anderen Winkelinformationen werden relativ zu diesem Impuls gewonnen.

Neben der Hauptaufgabe der Ermittlung des Verzuges der textilen Warenbahn ist auch eine Phase-Lock-Loop-Funktion für ein warengeschwindigkeits- bzw. warenproportionales Signal vorgesehen. Weiterhin kann mittels eines Fast-Fourier-Transformations-Funktion eine Bestimmung des Fadendichtespektrums durchgeführt werden. Auch ist eine Hüllkurvenanalysefunktion zur Detektion der Abtastbarkeit des textilen Materials vorgesehen.

Zur Erleichterung der Warenverzugsermittlung wird durch eine geeignete Signalkondition für eine möglichst optimale Hüllkurve des Ausgangssignals des Lichtsensorsystems 26 gesorgt. Optimal heißt in diesem Fall, daß ein ausreichend gutes Signal-Rausch-Verhältnis vorliegt und eine Beseitigung von Mehrdeutigkeiten in der Signalform erreicht wird.

Die Auswertung der vom Lichtsensorsystem 26 abgegebenen Signale kann bspw. dadurch erfolgen, daß diese Signale mit einer Fensterfunktion multipliziert werden, wobei der gefundene Wert mit einer Dämpfung zu beaufschlagen ist. Die Verstärkungsregelung in der Auswerteschaltung ist der Lichtregelung zumindest bei Durchlicht untergeordnet. Die Auswerteeinheit entscheidet über die Lichtstufe bei Durchlicht, wobei entsprechend der Lichtstufe auch die Verstärkungsregelung angepaßt bzw. eingestellt wird.

Bzgl. der Filterfrequenz ist festzustellen, daß viele schwierige Qualitäten des textilen Materials erst durch Einsatz eines Fadendichtefilters abtastbar werden. Bei einem Fadendichtefilter wird die Filterzeitkonstante an die Geschwindigkeit der vorbeilaufenden Ware angepaßt. Hierzu wird das Warensignal an markanten Winkelpositionen digitalisiert und unter Berücksichtigung der Warengeschwindigkeit einer Frequenzanalyse unterzogen. Bei Waren mit geringem Signal-Rausch-Abstand der erfaßten Signale kann dann durch geeignete Filter das Meßergebnis erheblich verbessert werden. Waren, bei denen Nebenmaxima auftreten, wie z. B. Schlingenware oder Maschenware, werden durch dieses Verfahren überhaupt erst abtastbar. Die Möglichkeiten hierbei sind sehr vielfältig und erfordern ein hohes Maß an Flexibilität, jedoch kann ein Großteil der schwierigen textilen Warenqualitäten durch Einhaltung einiger, einfacher Regeln ausgewertet werden.

Die Hüllkurvenauswertung der gewonnenen Meßdaten beginnt mit einem groben Plausibilitätstest, wobei dann das gefilterte Kurvensignal entsprechend den Kalibrierdaten korrigiert, aufsummiert und als aktuelle Hüllkurve ausgewertet wird. Bei der Auswertung sind folgende Kriterien zu beachten: Ausreichender Signal-Rausch-Abstand, die Symmetrieeigenschaften der Hüllkurve, Mehrdeutigkeitsanalyse (Nebenmaxima), Plausibilitätskontrolle und Statistik.

Aus dieser Analyse kann dann abgeleitet werden, ob eine Ergebnisverbesserung durch Variation der Auswerte- oder sonstiger Parameter möglich oder sinnvoll ist, welchen Verzug die textile Warenbahn aufweist und ob die Abtastqualität bspw. noch nicht ausreichend ist und dieses der Auswerteeinheit bzw. dem Rechner mitgeteilt wird.

### Bezugszeichenliste

- 10 -: Vorrichtung
- 12 -: Warenbahn
- 14 -: Meßkopf
- 16 -: Durchlichtanordnung
- 18 -: Auflichtanordnung
- 20 -: optisches System
- 22 -: Linsensystem
- 24 -: Blendensystem
- 26 -: Lichtsensorsystem
- 28 -: Blendenfunktion
- 30 -: Blendenfunktion
- 32 -: Spalt
- 34 -: Spalt
- 36 -: Blende
- 38 -: Durchbrechung
- 40 -: Kreuz
- 46 -: Systemlängsachse
- 48 -: Spaltblende
- 50 -: Spaltblende
- 52 -: Systemlängsachse
- 54 -: Systemlängsachse
- 56 -: Schrittmotor
- 58 -: Riementrieb
- 60 -: Verzahnung
- 62 -: Infrarot-Leuchtdioden
- 64 -: Lichtsammelsystem
- 66 -: Abdecktubus
- 68 -: Filterfunktion
- 70 -: Additionsfunktion
- 72 -: Gehäuse
- 73 -: Leiterplatte
- 74 -: Referenzpositionsgeber
- 75 -: Segmentblende
- 76 -: Durchbrechungen

## Patentansprüche

1. Vorrichtung (10) zur Messung der Schußfaden- oder Maschenreihenlage, insbesondere des Verzuges, z.B. Bogenverzug, Diagonalverzug, S-Verzug o. dgl., einer laufenden textilen Warenbahn (12) mit einer Meßvorrichtung zur Erfassung des von der zu prüfenden Ware hindurchgelassenen bzw. reflektierten Lichtes einer Durchlicht- und/oder Auflichtanordnung (16, 18), wobei die Meßvorrichtung ein optisches System (20) mit insbesondere einem Linsensystem (22), einem Blendensystem (24) sowie einem Lichtsensorsystem (26) aufweist und die Winkellage des Blendensystems (24) bzgl. der zu prüfenden Ware zeitlich veränderbar ist, wobei das Blendensystem (24) durch zwei benachbart angeordnete Blendenfunktionen (28, 30) gebildet wird, wobei jede Blendenfunktion (28, 30) Bestandteil eines separaten optischen Systems (20) mit einem Linsensystem (22) und einem Lichtsensorsystem (26) und in Rotation um eine Systemlängsachse (52, 54) versetzbar ist, dadurch gekennzeichnet, daß jede Blendenfunktion (28, 30) einen einzigen Schlitz (32, 34) aufweist, die Schlitze (32, 34) gegeneinander um etwa 90° versetzt angeordnet und die beiden Blendenfunktionen in einem einzigen Meßkopf (14) integriert sind.

2. Vorrichtung nach Anspruch 1, dadurch gekennzeichnet, daß die Systemlängsachse (52, 54) in etwa, bevorzugt exakt die Mitte des Schlitzes (32, 34) durchstößt.

3. Vorrichtung nach einem der Ansprüche 1 oder 2, dadurch gekennzeichnet, daß jede Blendenfunktion (28, 30) zusammen mit dem zugehörigen Linsensystem (22) in Rotation um die jeweilige Systemlängsachse (52, 54) versetzbar ist.

4. Vorrichtung nach Anspruch 3, dadurch gekennzeichnet, die Rotationsfrequenz der Blendenfunktion (28, 30) gleiche Werte annimmt.

5. Vorrichtung nach einem der Ansprüche 1 bis 4, dadurch gekennzeichnet, daß die beiden Blendenfunktionen (28, 30) gegensinnig um ihre Systemachse (52, 54) gedreht werden.

6. Vorrichtung nach einem der vorhergehenden Ansprüche, dadurch gekennzeichnet, daß das Linsensystem (22) durch eine Zylinderlinse gebildet ist.

7. Vorrichtung nach einem der vorhergehenden Ansprüche, dadurch gekennzeichnet, daß jedem Meßkopf (14) ein Schrittrotor (56) zugeordnet ist, der über einen Riementrieb (58), wie O-Ring, Zahnriemen o. dgl., bzw. über ein Zahnradgetriebe mit dem oder den optischen Systemen (20) in Antriebsverbindung steht.

8. Vorrichtung nach einem der Ansprüche 1 bis 7, dadurch gekennzeichnet, daß die beiden separaten optischen Systeme (20) unmittelbar über eine Verzahnung (60) in Antriebsverbindung stehen, wobei der Schrittmotor (56) eines der beiden optischen Systeme (20) antreibt.

9. Vorrichtung nach einem der vorhergehenden Ansprüche, dadurch gekennzeichnet, daß eine Auflichtanordnung (18), bspw. in Form von Infrarot-Leuchtdioden (62) o. dgl., in dem Meßkopf (14) aufgenommen und abgeschirmt seitlich des optischen Systems (20) angeordnet ist.

10. Vorrichtung nach einem der vorhergehenden Ansprüche, dadurch gekennzeichnet, daß zwischen dem Blendensystem (24) und dem Lichtsensorsystem (26) ein Lichtsammelsystem (24), wie Lichtleiter, Spiegel und/oder Linse, angeordnet ist.

11. Vorrichtung nach einem der vorhergehenden Ansprüche, dadurch gekennzeichnet, daß das Lichtsensorsystem (26) im Inneren eines Abdecktubus (66), insbesondere stationär, angeordnet, wobei der Abdecktubus (66) Zentrierhilfen zur Führung/Lagerung des Blendensystems (24) aufweist.

12. Vorrichtung nach einem der Ansprüche 1 bis 11, dadurch gekennzeichnet, daß die Ausgangssignale der beiden Lichtsensorsysteme (26) des Meßkopfes (14) jeweils eine Filterfunktionen (68) durchlaufen und einer Additionsstufe (70) zugeführt werden.

13. Vorrichtung nach einem der vorhergehenden Ansprüche, dadurch gekennzeichnet, daß das Linsensystem (22) und das Blendensystem (24) in einem drehbar gelagerten Gehäuse (72) montiert und das Lichtsensorsystem (26) stationär im Meßkopf (14) angeordnet sind.

14. Vorrichtung nach einem der vorhergehenden Ansprüche, gekennzeichnet durch eine Drehzahl des Blendensystems (24) von bevorzugt ca. 6 Umd/sec und/oder einer Schrittzahl des Schrittmotors (56) von ca. 400 Schritten pro Umdrehung.
